(19) Europäisches Patentamt
European Patent Office
Office européen des brevets

(11) Numéro de publication: **0 074 323**
**B1**

(12) # FASCICULE DE BREVET EUROPEEN

(45) Date de publication du fascicule du brevet: **12.12.84**

(51) Int. Cl.³: **A 01 K 63/04**

(21) Numéro de dépôt: **82430021.4**

(22) Date de dépôt: **13.08.82**

(54) **Garniture échangeuse d'ions pour fond d'aquarium.**

(30) Priorité: **25.08.81 FR 8116343**

(43) Date de publication de la demande: **16.03.83 Bulletin 83/11**

(45) Mention de la délivrance du brevet: **12.12.84 Bulletin 84/50**

(84) Etats contractants désignés: **AT BE CH DE GB IT LI LU NL SE**

(56) Documents cités:
**CH - A - 482 392**
**US - A - 3 868 525**
**US - A - 3 983 843**
**US - A - 4 002 566**

(73) Titulaire: **Quentin, Michel, Route de Nîmes, F-30230 Bouillargues (FR)**

(72) Inventeur: **Quentin, Michel, Route de Nîmes, F-30230 Bouillargues (FR)**

(74) Mandataire: **Azais, Henri et al, c/o CABINET BEAU DE LOMENIE 14, rue Raphael, F-13008 Marseille (FR)**

**EP 0 074 323 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

La présente invention a pour objet des garnitures échangeuses d'ions pour founds d'aquarium.

Le terme aquarium est utilisé dans un sens général pour désigner tout récipient, de n'importe quelle forme ou volume, dans lequel on élève des poissons, des batraciens, des crustacés ou des reptiles (terrarium) dans de l'eau.

On sait que l'on place fréquemment dans les aquariums des plantes aquatiques qui ont non seulement un rôle ornemental, mais qui éliminent également les algues et les gaz ou sels dissous dans l'eau tels que le gaz carbonique, l'azote ammoniacal, nitreux ou nitrique, les phosphates, les sulfates etc.

De plus, les plantes aquatiques produisent de l'oxygène et servent d'aliments vegétaux pour les animaux et d'abris pour les jeunes animaux et pour les animaux craintifs.

Les fonds d'aquarium comportent généralement un lit de sable quartzeux inerte, qui peut servir à filtrer l'eau qui est reprise sous le lit de sable et qui est recyclée.

Les plantes aquatiques s'enracinent dans le lit de sable, mais elles ne trouvent pas dans celui-ci suffisamment d'éléments nutritifs. Pour pallier cet inconvénient, on a utilisé des garnitures de fond d'aquarium, placées au-dessous du lit de sable, lesquelles garnitures sont composées d'un substrat argilo-humide composé de terre argileuse, de tourbe, de pouzzolane et de limon, lequel substrat contient des sels minéraux nutritifs assimilables par les plantes aquatiques. Ces garnitures sont placées dans un filet permettant le passage des racines.

Des garnitures de fond d'aquarium sont décrites dans les brevets antérieurs ci-après:

Le brevet CH-A-482 392 (AQUARIUM SYSTEMS), décrit un filtre biochimique composé de particules calcaires.

Le brevet US-A-4 002 566 (SMITH) décrit une garniture d'aquarium contenant à l'intérieur d'une enveloppe poreuse un mélange de mousse végétale, de diatomite, de gravier, d'argile et de farine d'os.

Le brevet FR-A-2 424 880 (TETRA) décrit un procédé de traitement de l'eau d'un aquarium par des résines artificielles échangeuses de cations.

Le brevet US-A-2 868 525 et le brevet US-A3 983 843 (JOHNSON) décrivent des garnitures d'aquarium composées respectivement de laime de verre ou d'un lit de fibres et de grains de charbon de bois enfermés dans une enveloppe poreuse.

Les garnitures connues de l'argile ou des matières organiques se détériorent et polluent l'eau. Les garnitures connues ont le plus souvent une densité volumétrique importante, ce qui entraîne des frais de transport élevés.

L'objectif de la présente invention est de procurer des garnitures pour fond d'aquarium qui remédient à ces inconvénients qui sont particulièrement adaptées pour des aquariums contenant des plantes aquatiques, mais qui peuvent être utilisées également dans des aquariums sans plantes aquatiques.

L'objectif de l'invention est atteint au moyen de garnitures échangeuses d'ions qui sont destinées à être placées au fond d'un aquarium, de préference sous un lit de sable et qui comportent:

— un matelas fibreux, par exemple un matelas en fibres de verre ou en tout autre fibre synthétique ou minérale telle que des fibres d'amiante;
— et des grains poreux de zéolites.

Les grains de zéolites sont concassés ou broyés et ont une granulométrie de l'ordre d'un millimètre ou un centimètre.

Selon un autre mode de réalisation, les grains sont un mélange de zéolites et d'une résine synthétique échangeuse d'ions.

Afin d'améliorer les échanges d'ions, les grains poreux de zéolite et de résine sont imprégnés d'une solution nutritive, par exemple d'un engrais soluble complet pour plantes contenant de la potasse, de l'azone assimilable, des phosphates et des oligo-éléments.

Les grains poreux de zéolite et de résine peuvent également être imprégnés de sels destinés à modifier les caractéristiques physicochimiques de l'eau et notamment à maintenir le PH et à réduire la dureté de l'eau.

Selon un premier mode de réalisation, les grains poreux sont incorporés dans la masse du matelas fibreux.

Selon un autre mode de réalisation, le matelas fibreux est placé à l'intérieur d'une enveloppe en un matériau qui se laisse traverser par les racines des plantes aquatiques et les grains poreux de zéolite ou de résine échangeuse d'ions sont placés entre ledit matelas et l'enveloppe.

L'invention a pour résultat de nouveaux produits destinés à être placés au fond d'un aquarium, de préférence sous un lit de sable.

Un avantage de ces garnitures réside dans le fait que le lit de sable peut être utilisé comme lit filtrant car l'eau circule facilement à travers le matelas fibreux qui, de plus, ne se colmate pas.

Un autre avantage réside dans le fait que les grains de zéolite sont un matériau très poreux, qui est pénétré par l'eau et qui échange facilement des ions avec celle-ci.

Les zéolites naturelles échangent des ions positifs avec l'eau, notamment des ions sodium, et on peut utiliser des grains de zéolite naturelle dans une garniture selon l'invention.

Les zéolites échangent facilement leurs ions sodium avec d'autres ions positifs de l'eau tels que des ions calcium, magnésium et cet échange contribue à l'adoucissement de l'eau et au maintien du PH de celle-ci.

Les garnitures selon l'invention servent de substrat aux plantes aquatiques qui s'enracinent dans le matelas fibreux.

Dans ce cas, afin de conférer aux zéolites des propriétés nutritives de longue durée, on enrichit les zéolites avant de les placer dans la garniture en les imprégnant d'une solution nutritive. N'importe quel engrais soluble complet pour plantes peut être utilisé pour imprégner les zéolites. Les zéolites peuvent être mélangées à des résines échangeuses d'ions du type des résines synthétiques utilisées pour adoucir ou déminéraliser l'eau.

Les garnitures selon l'invention présentent l'avantage que les éléments qui les composent pas au contact de l'eau et ne risquent pas de souiller l'eau de l'aquarium.

Les garnitures selon l'invention ont une masse volumique très faible donc un faible poids et peuvent être transportées à longue distance sans entraîner des frais de transport importants.

Avangageusement, les garnitures selon l'invention sont vendues avec des plantes aquatiques déjà enracinées dans la garniture, ce qui garantit une réussite totale lors de l'implantation de ces plantes dans un aquarium.

La description suivante se réfère au dessin annexé qui représente, sans aucun caractère limitatif, un aquarium équipé d'une garniture selon l'invention.

La figure unique est une coupe verticale transversale d'un aquarium 1. La partie gauche de la figure est la face avant de l'aquarium.

L'aquarium 1 contient des plantes aquatiques 2 qui sont situées dans la partie arrière. L'aquarium 1 comporte, dans son fond, une garniture 3 selon l'invention qui est posée sur le fond, sous un lit de sable 4.

La garniture 3 occupe tout le fond de l'aquarium. Elle est composée, soit d'une seule, pièce, soit de plusieurs bandes ou pavés juxtaposés. La garniture 3 comporte un matelas 5 de fibres qui est par exemple un matelas de fibres de verre ou de toute autre fibre synthétique, minérale ou végétale équivalente par exemple un matelas de laine d'amiante.

De préférence, l'épaisseur du matelas 5 va en croissant de l'avant vers l'arrière, ceci afin d'accroître l'effet de profondeur de l'aquarium et également afin que les racines des plantes 2 puissent s'enraciner dans la masse des fibres située à l'arrière.

Par exemple, l'apaisseur du matelas 5 est de l'ordre de 50 à 100 mm à l'arrière et de 10 à 20 mm à l'avant.

La garniture 3 comporte, en outre, des grains 6 d'un matériau poreux échangeur d'ions.

Dans l'exemple représenté, la garniture 3 comporte, en outre, une enveloppe 7 qui entoure le matelas fibreux et les grains 6 sont placés entre le matelas fibreux et l'enveloppe.

De préférence, les grains 6 sont placés entre l'enveloppe et la face horizontale du matelas fibreux qui occupe la position inférieure, de telle sorte que les racines des plantes 2 traversent tout le matelas pour accéder aux éléments nutritifs contenus dans les grains 6.

En variante, les grains 6 peuvent être incorporés dans la masse du matelas fibreux et, dans ce cas, l'enveloppe 7 n'est pas obligatoire. L'enveloppe 7 est en un matériau qui retient les grains 6 mais qui est perméable à l'eau et qui se laisse traverser par les racines des plantes.

Selon un mode de réalisation préférentiel, l'enveloppe 7 est une feuille de fibres synthétiques non tissées et agglomérées entre elles par un liant. Les fibres sont par exemple des fibres non putrescibles de polyester, de polyamide ou de polypropylène.

En variante, l'enveloppe 7 peut être constituée par exemple par un filet ou un treillis à mailles suffisamment fines pour retenir les grains 6.

Le matériau échangeur d'ions 6 constitue une des caractéristiques de l'invention.

Selon un mode de réalisation préférentiel, ce matériau est constitué par des grains de zéolite naturelle broyée ou concassée afin d'obtenir une granulométrie de l'ordre de 1 mm à 1 cm.

On rappelle que les zéolites sont des roches volcaniques composées de silicate d'alumine hydratés ayant une structure très poreuse. A titre d'exemple, on utilise la zéolite connue sous le nom de Phillipsite dont la formule est:

$$(Ca \cdot O_5 \cdot NaK)\, 6\, |\, Al_6 \cdot Si_{10} \cdot O_{32}\, |\, 12\, H_2O.$$

On citera à titre d'exemple non limitatif comme autres variétés de zéolites utilisables, l'analcine, la mordonite, l'érionite, l'heulandite, la clinoptilotite, la chabazie.

Les zéolites naturelles contiennent du sodium et quelquefois du potassium et présentent la propriété d'échanger facilement les ions sodium ou potassium contre d'autres cations tels que des ions $Ca^{++}$, $Mg^{++}$ ou même $H^{+}$.

Cette propriété fait que les zéolites ont une action adoucissante et épuratrice de l'eau d l'aquarium. Elles retiennent notamment l'azote gazeux ou ammonical dissous dans l'eau qui provient des déjections des poissons. Elles régularisent le pH de l'eau de l'aquarium.

La quantité de zéolites à utiliser est relativement faible comprise par exemple entre 1 g et 10 g par litre d'eau de l'aquarium.

Dans le cas où l'aquarium contient de plantes aquatiques, les zéolites servent en même temps d'éléments nutritifs pour les racines des plantes. De préférence,on améliore, les propriétés nutritives des zéolites en les imprégnant d'une solution nutritive avant de les placer dans la garniture.

Par exemple, on les imprègne de n'importe quel engrais liquide complet destiné aux plantes et contenant des nitrates de potassium et d'ammonium et des phosphates d'ammonium. De préférence, on choisit un engrais liquide contenant des oligo-éléments nécessaires aux plantes tels que du molybdène, du manganèse, du cuivre, du zinc, du fer, du bore, du soufre.

Les zéolites libèrent progressivement les cations dont elles sont imprégnées, de sorte que la durée de vie d'une garniture selon l'invention, est très longue, de l'ordre de plusieurs années.

Selon un mode d'utilisation avantageux, les garnitures sont vendues en pavés juxtaposables pouvant contenir chacun une ou plusieurs plantes aquatiques déjà précultivées et enracinées dans le matelas fibreux, de sorte que la réussite de la transplantation des plantes dans l'aquarium est assurée.

Les zéolites sont des roches qui une fois lavées ne comportent aucun élément argilo-limoneux susceptible de souiller l'eau de l'aquarium. Elles ne se décomposent pas pendant leur séjour dans l'aquarium.

En variante, les zéolites naturelles peuvent être remplacées par des grains de zéolites artificielles connues sous le nom de permutite qui sont un mélange de kaolin, de quartz et de carbonate de sodium et qui sont utilisées pour adoucir ou déminéraliser l'eau.

Les zéolites peuvent être mélangées à des résines synthétiques échangeuses d'ions telles que des résines phénoliques (amberlite, wofatite), échangeuses de cations ou des résines aminées échangeuses d'anions.

Les résines échangeuses d'ions sont utilisées couramment dans l'industrie par exemple pour adoucir de l'eau ou pour obtenir de l'eau déminéralisée très pure ou pour produire de l'eau douce à partir d'eau salée.

Les propriétés échangeuses d'ions des zéolites naturelles sont connues et celles-ci ont été utilisées comme lits filtrants pour débarrasser l'eau de certains sels.

La présente invention constitue une application nouvelle des zéolites et des résines échangeuses d'ions en incorporant celles-ci à des garnitures de fond d'aquarium comportant un matelas fibreux. Le matelas fibreux évite un contact direct de l'eau de l'aquarium avec les grains de zéolites ou de résines échangeuses d'ions, de sorte que l'échange d'ions entre l'eau et les grains se fait à un rythme très lent qui suffit aux besoins d'où une durée de vie des garnitures beaucoup plus grande.

Dans le cas où l'on mélange les zéolites à des résines échangeuses d'ions qui sont plus actives, la quantité de résines utilisées est comprise entre 0,5 g et 5 g par litre d'eau.

L'imprégnation préalable des grains de zéolite ou de résine échangeuse d'ions par une solution nutritive se fait en trempant les grains dans une telle solution et en les laissant séjourner dans celle-ci ou en malaxant les grains de zéolite et/ou de résine échangeuse d'ions en présence d'une solution nutritive.

## Revendications

1. Garniture échangeuse d'ions pour fond d'aquarium notamment pour des aquariums contenant des plantes aquatiques, ladite garniture comportant un matelas fibreux et étant, caractérisée en ce qu'elle comporte également des grains poreux de zéolites.

2. Garniture selon la revendication 1, caractérisée en ce qu'elle comporte, en outre, des grains poreux d'une résine échangeuse d'ions.

3. Garniture selon l'une quelconque des revendications 1 et 2, caractérisée en ce que lesdits grains poreux sont imprignés d'une solution nutritive.

4. Garniture selon l'une quelconque des revendications 1 à 3, caractérisée en ce que lesdits grains poreux sont incorporés dans la masse dudit matelas fibreux.

5. Garniture selon l'une quelconque des revendications 1 à 3, comportant en outre, une enveloppe en un matériau perméable à l'eau, qui se laisse traverser par les racines des plantes aquatiques et qui entoure ledit matelas fibreux, caractérisée en ce que lesdits grains poreux sont placés entre le dessous dudit matelas et ladite enveloppe.

6. Garniture selon la revendication 5, caractérisée en ce que l'épaisseur dudit matelas fibreux croît de l'avant vers l'arrière de l'aquarium et lesdits grains poreux sont placés dans le fond de la partie arrière de la garniture.

7. Garniture selon l'une quelconque des revendications 1 à 6, caractérisée en ce que la quantité de grains poreux est comprise entre 0,5 g et 10 g par litre d'eau.

8. Garniture selon l'une quelconqué des revendication 1 à 7, caractérisée en ce qu'elle comporte, de plus, des plantes aquatiques enracinées dans ledit matelas fibreux.

## Patentansprüche

1. Ionenaustauschergarnitur für den Boden eines Aquariums, insbesondere für Aquarien mit Wasserpflanzen, welche Garnitur ein Faserkissen umfaßt und dadurch gekennzeichnet ist, daß sie auch poröse Zeolithkörner umfaßt.

2. Garnitur nach Anspruch 1, dadurch gekennzeichnet, daß sie weiters poröse Körner eines Ionenaustauscherharzes umfaßt.

3. Garnitur nach einem der Ansprüche 1 und 2, dadurch gekennzeichnet, daß die porösen Körner mit einer Nährlösung imprägniert sind.

4. Garnitur nach einem der Ansprüche 1 bis 3, dadurch gekennzeichnet, daß die porösen Körner in die Masse des Faserkissens eingearbeitet sind.

5. Garnitur nach einem der Ansprüche 1 bis 3 mit weiters einer Hülle aus wasserdurchlässigem Material, die sich von den Wurzeln der Wasserpflanzen durchdringen läßt und das Faserkissen umgibt, dadurch gekennzeichnet, daß die porösen Körner zwischen der Unterseite des Kissens und der Hülle angeordnet sind.

6. Garnitur nach Anspruch 5, dadurch gekennzeichnet, daß die Stärke des Faserkissens vom Vorderteil zur Rückseite des Aquariums zu wächst und daß die porösen Körner im Boden

des hinteren Teils der Garnitur angeordnet sind.

7. Garnitur nach einem der Ansprüche 1 bis 6, dadurch gekennzeichnet, daß die Menge an porösen Körnern zwischen 0,5 g und 10 g pro Liter Wasser beträgt.

8. Garnitur nach einem der Ansprüche 1 bis 7, dadurch gekennzeichnet, daß sie außerdem in dem Faserkissen verwurzelte Wasserpflanzen umfaßt.

**Claims**

1. Ion-exchanging lining for lining the bottom of an aquarium, and in particular an aquarium containing aquatic plants, said lining comprising a fibrous layer and being characterized in that it further comprises porous particles of zeolites.

2. Lining according to claim 1, characterized in that it further comprises porous particles of an ion-exchanging resin.

3. Lining according to claims 1 and 2, characterized in that said porous particles are impregnated with a nutrient solution.

4. Lining according to any one of claims 1 to 3, characterized in that said porous particles are incorporated in the mass of said fibrous layer.

5. Lining according to any one of claims 1 to 3, further comprising a casing in a water-permeable material which allows through the roots of the aquatic plants and which encloses said fibrous layer, characterized in that said porous particles are placed between the underneath part of said layer and said casing.

6. Lining according to claim 5, characterized in that the thickness of said fibrous layer increases from the front towards the back of the aquarium and said porous particles are placed at the bottom of the rear part of the lining.

7. Lining according to any one of claims 1 to 6, characterized in that the quantity of porous particles is between 0.5 g and 10 g per litre of water.

8. Lining according to any one of claims 1 to 7, characterized in that it further comprises aquatic plants rooted in said fibrous layer.

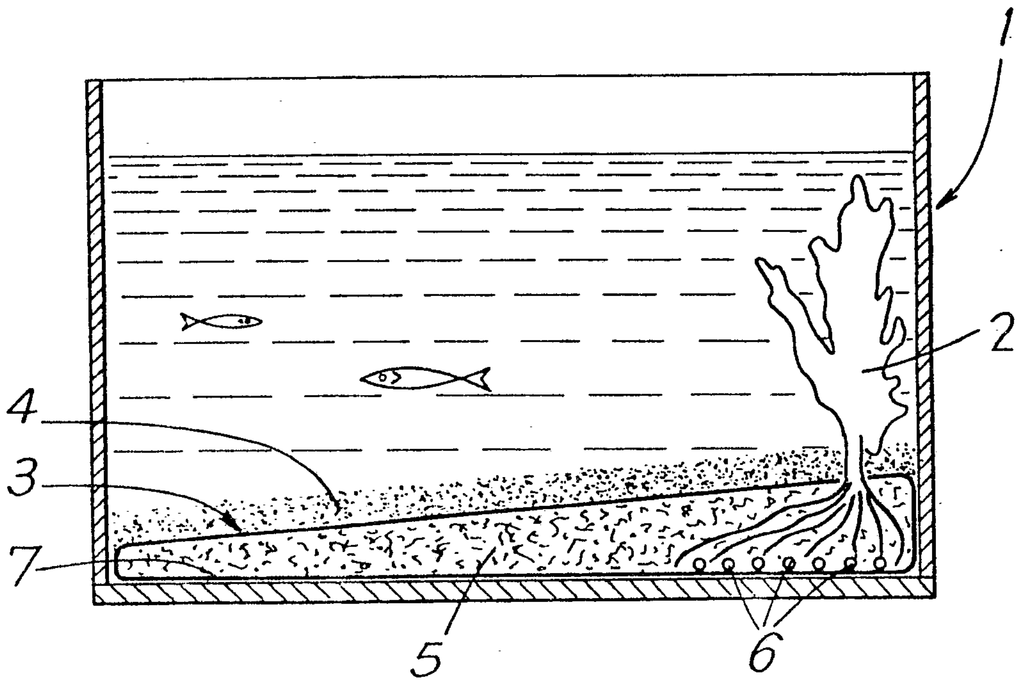
1
2
4
3
7
5
6